# EUROPÄISCHE PATENTSCHRIFT

(11) **EP 1 992 902 B1**
(45) Veröffentlichungstag und Bekanntmachung des Hinweises auf die Patenterteilung: **13.08.2014**
(21) Anmeldenummer: 08008350.4
(22) Anmeldetag: 02.05.2008
(51) Int. Cl.: F41G 7/22, G01S 7/495

(54) **IR-Täuschsystem zur Abwehr von Flugkörpern mit IR-empfindlichen Suchköpfen**
IR deception system for defending against missiles with IR sensitive seekers
Système de leurrage IR pour une défense anti aérienne contrant les missiles équippés de têtes chercheuses sensibles aux IR

(30) Priorität: 15.05.2007 DE 102007022820
(43) Veröffentlichungstag der Anmeldung: 19.11.2008
(73) Patentinhaber: EADS Deutschland GmbH, 85521 Ottobrunn (DE)
(72) Erfinder: Hamilton, Colin, 89134 Blaustein (DE)
(74) Vertreter: Meel, Thomas

(56) Entgegenhaltungen:
- EP-A2- 1 298 408
- ANONYMOUS: "Directional Infrared Counter Measures" WIKIPEDIA, THE FREE ENCYCLOPEDIA, [Online] XP002498701 Gefunden im Internet: URL:http://en.wikipedia.org/wiki/DIRCM>
- ANONYMOUS: "AN/AAQ-24 Directional Infrared Countermeasures (DIRCM)" INTERNET ARTICLE, [Online] 27. April 2005 (2005-04-27), XP002498702 Gefunden im Internet: URL:http://www.globalsecurity.org/military /systems/aircraft/systems/an-aaq-24.htm>
- ANONYMOUS: "AN/AAQ-24(V) NEMESIS Directional Infrared Countermeasure (DIRCM)" NORTHROP GRUMMAN PRODUCT & SOLUTIONS BROCHURE, [Online] XP002498703 Gefunden im Internet: URL:http://www.es.northropgrumman.com/solu tions/nemesis/assets/AAQ24.pdf>

## Beschreibung

Die Erfindung betrifft ein IR-Täuschverfahren zur Abwehr von Flugkörpern, welche mit IR-empfindlichen Suchköpfen ausgerüstet sind nach dem Oberbegriff des Patentanspruch 1.

Flugkörper mit IR-empfindlichen Suchköpfen sind eine wesentliche Bedrohung für militärische und zunehmend auch für zivile Luftfahrzeuge. Diese Suchköpfe arbeiten durch Aufspüren und Ausrichten auf die Hitze, die durch die Luftfahrzeug-Antriebe, durch Reibungswärme der Luftfahrzeugstruktur oder durch Reflektion von Sonnenstrahlung an Teilen der Luftfahrzeugstruktur erzeugt wird.

Bekannte und etablierte Maßnahmen gegen IR-empfindliche Suchköpfe sind Täuschkörper (so genannte Decoy Flares), welche durch das zu schützende Luftfahrzeug ausgestoßen werden, oder IR-Störsender (sogenannte aktive IR-Jammer), die einen starken Strahl von modulierter IR-Energie in Richtung auf den anfliegenden Flugkörper ausstrahlen (US 6,359,710 A).

Eine Anwendung von aktiven IR-Jammern besteht darin, durch hohe Energieeinstrahlung den Suchkopf zu blenden oder in die Sättigung zu bringen. Diese Methode ist sehr robust, jedoch sind Gegenmaßnahmen bekannt, um den Täuscheffekt zumindest zu reduzieren.

Gemäß einer weiteren Anwendung von aktiven IR-Jammern soll durch modulierte Strahlung ein Fehler im internen Zielverfolgungs-Algorithmus des Flugkörpers erzeugt werden. Dies funktioniert gut gegen Suchköpfe, die eine zeitbasierte Winkelmessung (so genanntes Time Based Angle Measurement) durchführen, ist aber weniger wirksam oder sogar unwirksam gegen Suchköpfe mit festem Suchfeld (so genannte Staring Sensors). Im letzteren Fall kann diese Täuschmaßnahme sogar kontraproduktiv sein, da es dem Suchkopf ein starkes Orientierungssignal bietet. Außerdem ergeben sich bei dieser Methode weitere Probleme, wenn eine Vielzahl von unterschiedlichen Suchkopf-Typen zeitgleich bekämpft werden müssen.

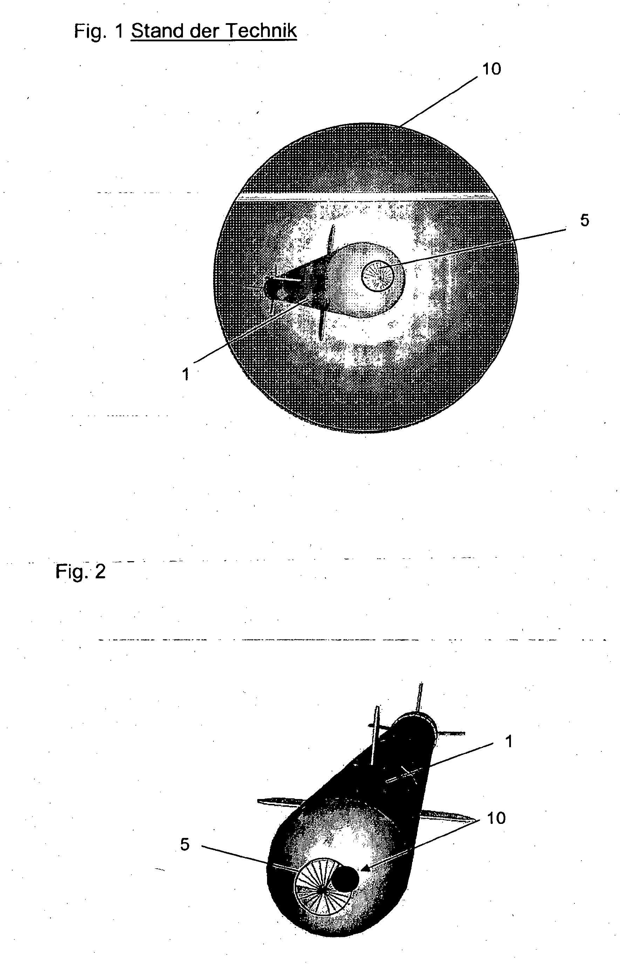

Bekannte aktive IR-Jammer, zum Beispiel das NEMESIS System von Northrop-Grumman, senden einen breiten Strahl 10 mit relativ großem Öffnungswinkel aus, der ein Vielfaches des Durchmessers des Flugkörpers 1 beträgt (Fig. 1). Typischerweise beträgt der Strahldurchmesser in Entfernungen von 1 bis 2 km mehr als 2 m. Durch diesen breiten Täuschstrahl 10 wird sichergestellt, dass eine ebene Welle in die Suchkopf-Optik 5 eintritt, wo sie auf ein Detektor-Element oder Detektor-Array fokussiert wird. Für diese Anwendung kann ein einfaches passives Trackingsystem geringer Genauigkeit für die Ausrichtung des Strahls eingesetzt werden. Wendet sich der Flugkörper jedoch vom Strahl ab, wird der Täuschstrahl stark abgeschwächt und der Täuscheffekt geht verloren.

In der EP 1298408 A2 ist ein Verfahren zur Abwehr von Flugkörpern mit IRempfindlichen Suchköpfen bekannt, beim welchem Täuschstrahlung mit stark gebündelter Laserstrahlung eingesetzt wird. Die Aufspreizung des Laserstrahls beträgt dabei weniger als 3 microrad.

Es ist Aufgabe der Erfindung, ein Verfahren anzugeben, das gegen alle Suchkopf-Typen wirksam ist, mit vergleichsweise niedrigenergetischer Strahlung auskommt, jedoch nur eine geringe Richtgenauigkeit erfordert.

Diese Aufgabe wird mit dem Verfahren nach Anspruch 1 gelöst. Vorteilhafte Ausführungen sind Gegenstand weiterer Ansprüche.

Gemäß der Erfindung werden für die Täuschung IR-Jammer eingesetzt, die Täuschstrahlen mit sehr geringem Durchmesser erzeugen, nämlich kleiner als die optische Apertur des Suchkopfs. Bei einem typischen, von einer Einzelperson abschießbaren Flugkörper (so genannte MANPAD Missiles) bedeutet dies ein Durchmesser des Täuschstrahls von < 6 cm. Die Beleuchtung des Suchkopfs wird reduziert auf eine Fläche, die geringer ist als seine optische Apertur.

Da nur ein Teil des Linsensystems des Suchkopfs beleuchtet wird, wird die IR-Energie nicht auf einen Punkt auf dem Detektorfeld fokussiert, sondern wird vielmehr in einer nicht vorhersehbaren Weise innerhalb des Suchkopfs gestreut, und zwar abhängig von der konkret beleuchteten Fläche und dem Einfallswinkel der Strahlung. Der Suchkopf empfängt ausreichend Energie, um ein einfallendes Signal als solches zu detektieren und versucht es zu verfolgen. Da aus dem einfallenden Signal jedoch keine konsistente Winkelinformation ableitbar ist, ergibt sich eine falsche Winkelmessung und darauf basierend eine falsche Zielverfolgung.

Anders als bei dem bekannten Jamming-Verfahren mit breiten Störstrahlen kann gemäß der Erfindung die Störenergie auch bei Einfallswinkeln, die sich stark von der Sensorblickrichtung unterscheiden, noch in den Sensor eintreten, so dass der Störeffekt aufrechterhalten wird, wenn sich der Flugkörper vom Ziel abwendet.

Vorteilhaft wird die erfindungsgemäße Beleuchtung mit Laserstrahlung durchgeführt, da bei Einsatz von nicht-kohärentem Licht sich dieses über die gesamte Sensor Apertur verteilen könnte, so dass der beabsichtigte Effekt verloren geht.

Die erfindungsgemäße Lösung weist die folgenden Vorteile auf:
- Sie ist universell einsetzbar, da sie gegen alle Arten von Tracking-Methoden wirksam ist, also sowohl bei abtastenden Sensoren als auch bei Sensoren mit festem Suchfeld.
- Es werden keine extrem hohen Strahlungsleistungen benötigt.
- Die notwendige Leistung kann durch mehrere Quellen relativ niedriger Leistung geliefert werden.
- Sie bietet die Möglichkeit der Leistungserzeugung bei unterschiedlichen Wellenlängenbereichen und nur gering verlustbehafteter Leistungsaddition im Raum.

Die Erfindung wird anhand konkreter Ausführungsbeispiele unter Bezugnahme auf Figuren erläutert. Es zeigen:
- Fig. 1: Beleuchtung eines Suchkopfs mit IR-Jammer nach dem Stand der Technik,
- Fig. 2: die Beleuchtung eines Suchkopfs mit IR-Jammer in Form dünner Täuschstrahlen gemäß der Erfindung,
- Fig. 3: die Beleuchtung eines Suchkopfs mit IR-Jammer in Form eines zweidimensionalen Strahlungs-Musters aus einzelnen Täuschstrahlen gemäß der Erfindung,
- Fig. 4.: zwei konkrete Ausführungen zur Strahlerzeugung gemäß der Erfindung:
a) zentrale Leistungserzeugung mit einer Strahlungsquelle
b) dezentrale Leistungserzeugung mittels mehrerer Strahlungsquellen,
- Fig. 5: die erfindungsgemäße Beleuchtung eines Suchkopfs mit IR-Jammer in Form von in einer Reihe angeordneten Täuschstrahlen.

Fig. 2 zeigt die erfindungsgemäße Beleuchtung des Suchkopfs eines feindlichen Flugkörpers 1 durch die Strahlung eines aktiven IR-Jammers in Form dünner Täuschstrahlen 10 gemäß der Erfindung (in der gezeigten Ausführung ist lediglich einer von mehreren Täuschstrahlen eingezeichnet, um das zugrundeliegende Prinzip zu erläutern). Man erkennt, dass der Durchmesser des Tauschstrahls 10 auf der Oberfläche des Suchkopfs kleiner ist als der Durchmesser der optischen Apertur 5 (also das IR-durchlässige optische Fenster am Bug des Flugkörpers), und dass der Täuschstrahl nur einen Teilbereich der optischen Apertur abdeckt. Somit kann der oben beschriebene Täuscheffekt erzielt werden.

Verglichen mit der bekannten Beleuchtung durch einen breiten Täuschstrahl erfordert die erfindungsgemäße Beleuchtung eine höhere Richtgenauigkeit um sicherzustellen, dass der Täuschstrahl die optische Apertur des Suchkopfs trifft. Aus diesem Grunde kann in einer vorteilhaften Ausführung anstatt eines einfachen passiven Trackers ein Radartracker oder ein Lasertracker (insbesondere ein so genannter Closed-Loop-Lasertracker) für die Ausrichtung der Täuschstrahlen eingesetzt werden.

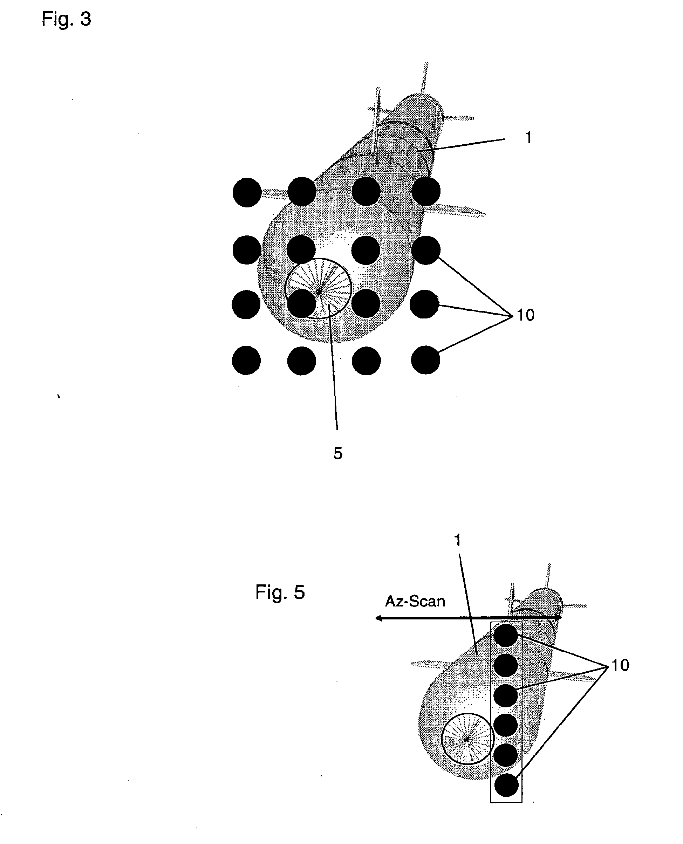

Um die Anforderung an die Richtgenauigkeit zu vermindern, wird ein (im Querschnitt) zweidimensionales Muster der beschriebenen Täuschstrahlen erzeugt. Ein solches Muster von Täuschstrahlen 10 ist in Fig. 3 gezeigt, hier in der Form eines regelmäßigen Gitters. Der Durchmesser der einzelnen Täuschstrahlen 10 auf der Oberfläche des Flugkörpers 1 ist kleiner als der Durchmesser der optischen Apertur 5 des Suchkopfs. Diese Ausführung erlaubt eine geringere Genauigkeit im Hinblick auf die Ausrichtung des Täuschstrahls, da für den angestrebten Täuscheffekt die teilweise Beleuchtung der optischen Apertur 5 durch lediglich einen Strahl 10 genügt. Der Abstand zwischen den einzelnen Strahlen 10 wird derart gewählt, dass die optische Apertur des Suchkopfs durch mindestens einen Strahl teilweise beleuchtet wird, unabhängig davon, wo sich der Flugkörper 1 innerhalb des Musters befindet.

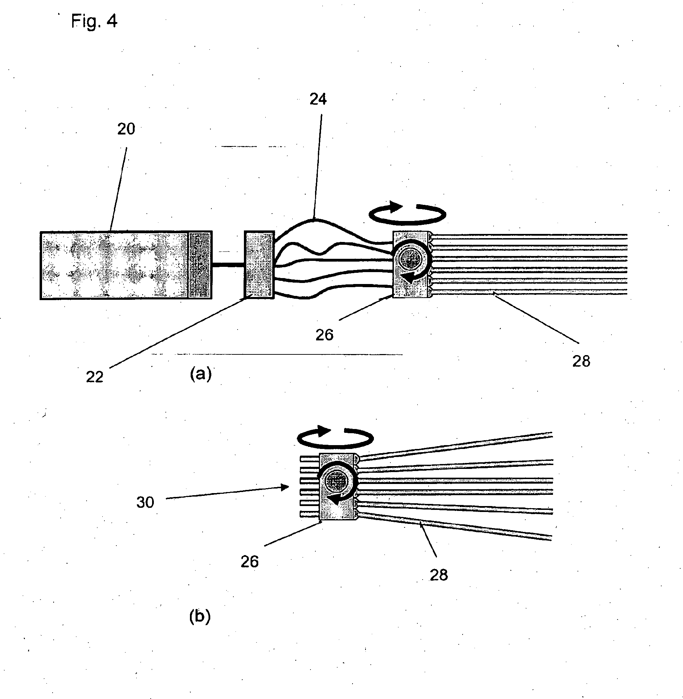

Dieses Muster kann durch unterschiedliche Konfigurationen erzeugt werden z.B.
a) mittels eines zentralen Lasers hoher Leistung, welcher ein Bündel von optischen Lichtleitfasern versorgt, welche ihrerseits mit einem optischen Linsenarray gekoppelt sind (Fig. 4a) oder
b) mittels eines Arrays von Festkörperlasern, jeder mit vergleichsweise niedriger Leistung (Fig. 4b),

In Fig. 4a ist das Prinzip der Verwendung eines zentralen Lasers 20 mit einem optischen Leistungsteiler 22 und einer Vielzahl von optischen Lichtleitfasern 24, welche ein zweidimensionales Linsensystem versorgen, dargestellt. Dabei ist jeder Lichtleitfaser 24 eine Linse zugeordnet. Die Linsen sind an einer kardanisch aufgehängten Platte 26 angeordnet, die sowohl in Azimut als auch in Elevation gedreht werden kann.

In Fig. 4b wird die Leistung durch ein Array von Festkörperlasern 30 erzeugt, wobei jedem Laser eine eigene Linse auf der kardanisch aufgehängten Platte 26 zugeordnet ist.

In beiden Fällen können die Strahlen 28 in einem bestimmten konstanten Abstand entweder parallel zueinander abgestrahlt werden oder divergierend, wobei die Divergenz an den Rändern zunimmt.

Parallele Abstrahlung ist in Fig. 4a gezeigt und divergierende Abstrahlung in Fig. 4b. Im Falle der letztgenannten Ausführung wird der Grad der Divergenz derart gewählt, dass der Abstand zwischen den Strahlen nicht übermäßig mit dem Abstand von dem Jammer ansteigt.

In einer weiteren Ausführung kann das oben beschriebene Muster zu einem Multi-Band-Muster erweitert werden, indem mehrere Muster unterschiedlicher Wellenlänge ineinander verschachtelt werden. Das bedeutet, in bestehende Lücken zwischen den einzelnen Strahlen eines Musters werden die Strahlen des anderen Musters angeordnet. Die Strahlen innerhalb desselben Musters sind dadurch gekennzeichnet, dass sie alle dieselbe Wellenlänge (bzw. dasselbe Wellenlängenband) aufweisen. Die Muster wiederum sind gekennzeichnet durch eine bestimmte Wellenlänge (bzw. Wellenlängenband), die unterschiedlich ist zu den Wellenlängen der anderen Muster.

Fig. 5 zeigt eine weitere erfindungsgemäße Ausführung. Dargestellt sind mehrere, in einer Reihe angeordnete Strahlen 10, welche zusammen in einer Raumrichtung verschwenkbar sind. Damit kann der dargestellte Raumbereich, in dem sich der Flugkörper 1 in etwa befindet, sehr schnell abgetastet werden.

In einer alternativen Ausführung kann ein zweidimensionales Muster von Täuschstrahlen auch durch Interferenz der Strahlung zweier kohärenter Quellen erzeugt werden.

In einer weiteren Ausführung wird ein zweidimensionales Strahlungsmuster durch Beugung an einer Beugungsstruktur erzeugt, z.B. an einem Gitter.

## Patentansprüche

1. Verfahren zur Abwehr von Flugkörpern (1) mit IR-empfindlichen Suchköpfen durch Ausstrahlung von Täuschstrahlung mit welcher die optische Apertur (5) des IR-empfindlichen Suchkopfs des Flugkörpers (1) nur teilweise beleuchtet wird, **dadurch gekennzeichnet, dass** die Täuschstrahlung in Form mehrerer Täuschstrahlen (10) erzeugt wird, wobei diese Täuschstrahlen die optische Apertur (5) des IR-empfindlichen Suchkopfs des Flugkörpers (1) jeweils nur teilweise beleuchten können, wobei die Täuschstrahlen (10) in einer einzelnen Reihe oder einem zweidimensionalen Muster erzeugt werden.

2. Verfahren nach Anspruch 1, **dadurch gekennzeichnet, dass** die Täuschstrahlen (10) mittels einer oder mehrerer kohärenter Lichtquellen (20,30) erzeugt werden.

3. Verfahren nach Anspruch 1, **dadurch gekennzeichnet, dass** mehrere ineinander verschachtelte Muster von IR-Täuschstrahlen (10) unterschiedlicher Wellenlängen erzeugt werden.

4. Verfahren nach einem der Ansprüche 1 oder 2, **dadurch gekennzeichnet, dass** durch ein Scanning-System die einzelne Reihe von Täuschstrahlern (10) mittlerer Energie in Azimut und/oder Elevation geschwenkt wird.

5. Verfahren nach einem der Ansprüche 1 bis 3, **dadurch gekennzeichnet, dass** das zweidimensionale Muster der Täuschstrahlen (10) erzeugt wird durch Beugung der Strahlung einer kohärenten Quelle an einer Beugungsstruktur.

6. Verfahren nach einem der Ansprüche 1 bis 3 , **dadurch gekennzeichnet, dass** das zweidimensionale Muster der Täuschstrahlen (10) erzeugt wird durch Interferenz der Strahlung zweier oder mehrerer kohärenter Quellen.

7. Verfahren nach einem der vorangehenden Ansprüche, **dadurch gekennzeichnet, dass** die Ausrichtung der Täuschstrahlen mittels eines Lasertrackers oder eines Radartrackers erfolgt.

## Claims

1. Method for defence against missiles (1) with IR-sensitive homing heads by emission of spoof radiation with which the optical aperture (5) of the IR-sensitive homing head of the missile (1) is only partially illuminated, **characterized in that** the spoof radiation is produced in the form of a plurality of spoof beams (10), said spoof beams respectively being able to illuminate the optical aperture (5) of the IR-sensitive homing head of the missile (1) only partially, the spoof beams (10) being produced in a single row or a two-dimensional pattern.

2. Method according to Claim 1, **characterized in that** the spoof beams (10) are produced by one or more coherent light sources (20, 30).

3. Method according to Claim 1, **characterized in that** a plurality of mutually interleaved patterns of IR spoof beams (10) of different wavelengths are produced.

4. Method according to either of Claims 1 or 2, **characterized in that** a scanning system pivots the single row of spoof beams (10) of medium-power in azimuth and/or elevation.

5. Method according to one of Claims 1 to 3, **characterized in that** the two-dimensional pattern of the spoof beams (10) is produced by diffraction of the radiation from a coherent source on a diffraction structure.

6. Method according to one of Claims 1 to 3, **characterized in that** the two-dimensional pattern of the spoof beams (10) is produced by interference of the radiation from two or more coherent sources.

7. Method according to one of the preceding claims, **characterized in that** the spoof beams are aligned by means of a laser tracker or a radar tracker.

## Revendications

1. Procédé de protection contre des missiles (1) équipés de têtes chercheuses sensibles aux IR en émettant un rayonnement de leurre avec lequel l'ouverture optique (5) de la tête chercheuse sensible aux IR du missile (1) n'est que partiellement éclairée, **caractérisé en ce que** le rayonnement de leurre est généré sous la forme de plusieurs rayons de leurre (10), ces rayons de leurre ne pouvant à chaque fois éclairer que partiellement l'ouverture optique (5) de la tête chercheuse sensible aux IR du missile (1), les rayons de leurre (10) étant générés dans une rangée unique ou selon un modèle bidimensionnel.

2. Procédé selon la revendication 1, **caractérisé en ce que** les rayons de leurre (10) sont générés au moyen d'une ou plusieurs sources de lumière cohérentes (20, 30).

3. Procédé selon la revendication 1, **caractérisé en ce que** plusieurs modèles imbriqués les uns dans les autres de rayons de leurre IR (10) ayant des longueurs d'onde différentes sont générés.

4. Procédé selon l'une des revendications 1 ou 2, **caractérisé en ce que** la rangée unique de rayons de leurre (10) à énergie moyenne est pivotée en azimut et/ou en élévation par un système de balayage.

5. Procédé selon l'une des revendications 1 à 3, **caractérisé en ce que** le modèle bidimensionnel des rayons de leurre (10) est généré par diffraction du rayonnement d'une source cohérente au niveau d'une structure de diffraction.

6. Procédé selon l'une des revendications 1 à 3, **caractérisé en ce que** le modèle bidimensionnel des rayons de leurre (10) est généré par une interférence du rayonnement de deux sources cohérentes ou plus.

7. Procédé selon l'une des revendications précédentes, **caractérisé en ce que** l'orientation des rayons de leurre s'effectue à l'aide d'un dispositif de poursuite à laser ou d'un dispositif de poursuite à radar.
